# EUROPEAN PATENT APPLICATION

(11) **EP 4 557 217 A1**
(43) Date of publication of application: **21.05.2025**
(21) Application number: 23209754.3
(22) Date of filing: 14.11.2023
(51) Int. Cl.: G06T 7/11, G06T 7/12, G06V 10/26, G06V 10/82

(54) **ASSISTED MEDICAL IMAGING SEGMENTATION**

(71) Applicant: Koninklijke Philips N.V., 5656 AG Eindhoven (NL)
(72) Inventor: GESSERT, Nils Thorben, Eindhoven (NL); EWALD, Arne, Eindhoven (NL); FLÄSCHNER, Nick, 5656AG Eindhoven (NL); CAROLUS, Heike, Eindhoven (NL); BROSCH, Tom, Eindhoven (NL); SCHMIDT-RICHBERG, Alexander, Eindhoven (NL)
(74) Representative: Philips Intellectual Property & Standards

(57) **Abstract**

Disclosed herein is a medical system (100, 300, 400). The execution of the machine executable instructions (120) causes a computational system (110) to repeatedly: receive (204) segmentation edit data (130) from a segmentation entry tool (128); collect (206) location specific segmentation tool use metadata (134) descriptive of use of the segmentation entry tool to enter the segmentation edit data at the edit location; determine (208) the anatomical location using the edit location; retrieve (210) the expected segmentation tool use metadata from a segmentation tool use database (122) using the anatomical location; determine (212) if anomalous segmentation edit data (806) is present by comparing location specific segmentation tool use metadata to the expected segmentation tool use metadata; provide (214) a signal (142, 404, 808) if the anomalous segmentation edit data is determined; and construct (216) a segmentation (144) of the medical image using the segmentation edit data.

## Description

### FIELD OF THE INVENTION

The invention relates to medical imaging, in particular to the segmentation of medical images.

### BACKGROUND OF THE INVENTION

There exist various imaging modalities which enable the acquisition of medical images which are descriptive of the internal anatomy of a subject. For example, a subject can be imaged using magnetic resonance imaging, computed tomography, positron emission tomography, and single photon emission tomography. Often times medical images are segmented. In segmentation, various regions of normal and/or abnormal are identified and delineated. Segmentation may be very useful for such things as tracking the growth of tumors over time or used during radiation therapy planning to control the amount of radiation delivered to different organs.

### SUMMARY OF THE INVENTION

The invention provides for a medical system, a computer program, and a method in the independent claims. Embodiments are given in the dependent claims.

In one aspect the invention provides for a medical system that comprises a memory storing both machine-executable instructions and segmentation tool use database. The segmentation tool use database comprises expected segmentation tool use metadata indexed as a function of an anatomical location. The medical system further comprises a computational system. Execution of the machine-executable instructions causes the computational system to receive a medical image.

Execution of the machine-executable instructions further causes the computational system to render the medical system on a user interface. The user interface comprises a segmentation entry tool. Execution of the machine-executable instructions further causes the computational system to repeatedly receive segmentation edit data from the segmentation entry tool. The segmentation metadata comprises an edit location within the medical image. Execution of the machine-executable instructions further causes the computational system to repeatedly collect location-specific segmentation tool use metadata descriptive of use of the segmentation entry tool to enter the segmentation edit data at the edit location. Execution of the machine-executable instructions further causes the computational system to repeatedly determine the anatomical location using the edit location.

Execution of the machine-executable instructions further causes the computational system to repeatedly retrieve the expected segmentation tool use metadata from the segmentation tool use database using the anatomical location. Execution of the machine-executable instructions further causes the computational system to repeatedly determine if anomalous segmentation edit data is present by comparing the location-specific segmentation tool use metadata to the expected segmentation tool use metadata. Execution of the machine-executable instructions further causes the computational system to repeatedly provide a signal if the anomalous segmentation edit data is determined. Execution of the machine-executable instructions further causes the computational system to repeatedly construct a segmentation of the medical image using the segmentation edit data.

In another aspect the invention provides for a method of medical imaging. The method comprises receiving a medical image. The method further comprises rendering the medical image on a user interface. The user interface comprises a segmentation entry tool. The method further comprises repeatedly receiving segmentation edit data from the segmentation entry tool. The segmentation edit data comprises an edit location within the medical image. The method further comprises repeatedly collecting location-specific segmentation tool use metadata that is descriptive of the use of the segmentation entry tool to enter the segmentation edit data at the edit location. The method further comprises repeatedly determining the anatomical location using the edit location. The method further comprises repeatedly retrieving the expected segmentation tool use metadata from a segmentation tool use database using the anatomical location. The segmentation tool use database comprises expected segmentation tool use metadata indexed as a function of an anatomical location.

The method further comprises repeatedly determining if anomalous segmentation edit data is present by comparing the location-specific segmentation tool use metadata to the expected segmentation tool use metadata. The method further comprises repeatedly providing a signal if the anomalous segmentation edit data is determined. The method further comprises repeatedly constructing a segmentation of the medical image using the segmentation edit data.

In another aspect the invention provides for a computer program that comprises machine-executable instructions and also comprises a tool use database. The segmentation tool use database comprises expected segmentation tool use metadata indexed as a function of an anatomical location. Execution of the machine-executable instructions causes the computational system to receive a medical image.

Execution of the machine-executable instructions further causes the computational system to render the medical image on a user interface. The user interface comprises a segmentation entry tool. Execution of the machine-executable instructions further causes the computational system to repeatedly receive segmentation edit data from the segmentation entry tool. The segmentation edit data comprises an edit location within the medical image. Execution of the machine-executable instructions further causes the computational system to repeatedly collect location-specific segmentation tool use metadata descriptive of the segmentation entry tool to enter the segmentation edit data at the edit location. Execution of the machine-executable instructions further causes the computational system to repeatedly determine the anatomical location using the edit location. Execution of the machine-executable instructions further causes the computational system to repeatedly retrieve the expected segmentation tool use metadata from the segmentation tool use database using the anatomical location.

Execution of the machine-executable instructions further causes the computational system to determine if anomalous segmentation edit data is present by comparing the location-specific segmentation tool use metadata to the expected segmentation tool use metadata. Execution of the machine-executable instructions further causes the computational system to provide a signal if the anomalous segmentation edit data is determined. Execution of the machine-executable instructions further causes the computational system to construct a segmentation of the medical image using the segmentation edit data.

### BRIEF DESCRIPTION OF THE DRAWINGS

In the following preferred embodiments of the invention will be described, by way of example only, and with reference to the drawings in which:
Fig. 1 illustrates an example of a medical system.
Fig. 2 shows a flow chart which illustrates a method of using the medical system of Fig. 1.
Fig. 3 illustrates a further example of a medical system.
Fig. 4 illustrates a further example of a medical system.
Fig. 5 illustrates an example of an image classifier neural network.
Fig. 6 illustrates a further example of an image classifier neural network.
Fig. 7 illustrates several views of a user interface.
Fig. 8 illustrates the detection of anomalous segmentation data.

### DETAILED DESCRIPTION OF EMBODIMENTS

Like numbered elements in these figures are either equivalent elements or perform the same function. Elements which have been discussed previously will not necessarily be discussed in later figures if the function is equivalent.

In an example, a medical system comprises a memory storing machine-executable instructions and a segmentation tool use database. The segmentation tool use database comprises expected segmentation tool use metadata indexed as a function of an anatomical location.
The segmentation tool use may for example be a database of historical data that contains information and prior knowledge on the problem being solved, e.g., in case of left ventricle segmentation of the heart, it contains information about difficult and ambiguous regions that are usually difficult to outline. This database can be built based on clinical expert knowledge on problem-specific annotation difficulties, e.g., through expert interviews or even by colleting and archiving data as the medical system is used.

A segmentation tool, as used herein, may encompass a tool or control element of a user interface which is used to either enter or edit a segmentation. Various metadata can be collected about a segmentation tool. For example, the speed at which the segmentation tool is used can be monitored; the level of zoom of the screen can be monitored.

Additionally, activities like erasing or modifying a segmentation using a segmentation tool may be used to classify how the segmentation tool was used as a particular segmentation was entered. The expected segmentation tool use metadata may for example be average values or ranges of particular metadata which are typical for a particular anatomical location. This may be beneficial because various anatomical locations may have different levels of complexity to the segmentation. This means that because of the complexity of a segmentation that is typical for an anatomical location the metadata when the segmentation is entered manually may also have certain characteristics such as they are a very complicated or detailed segmentation due to the anatomical location, then this may be repeated in segmentations by the same user or different users.

The medical system further comprises a computational system. The computational system may represent one or more computational systems located at one or more locations. Execution of the machine-executable instructions causes the computational system to receive a medical image. The medical image may for example be a tomographic medical image. The medical image may show or detail the internal anatomy of a subject. Execution of the machine-executable instructions further causes the computational system to render the medical image on a user interface. The user interface comprises a segmentation entry tool. As was described above, the segmentation entry tool is a tool which can be used to either enter or manipulate or edit a segmentation of the medical image. A segmentation as used herein is a line or surface which is used to divide the medical image into anatomically significant regions. For example, a segmentation may be used to typically divide the medical image into different tissue types or organs. Sometimes a segmentation may be used to identify the location or extent of abnormal anatomy such as a tumor or injury.

Execution of the machine-executable instructions further causes the computational system to repeatedly receive segmentation edit data from the segmentation entry tool. The segmentation edit data comprises an edit location within the medical image. The segmentation edit data is data which may be used to construct or modify a segmentation. The location within the medical image is a location which is identified within the medical image itself. For example, this may include the coordinates of voxels or pixels which are being edited nearby to the segmentation being modified or edited. Execution of the machine-executable instructions further causes the computational system to repeatedly collect location-specific segmentation tool use metadata that is descriptive of use of the segmentation entry tool to enter the segmentation edit data at the edit location. The segmentation for an anatomical region or abnormal structure within the medical image may have different details or different levels of editing which may be necessary or advisable to use when entering the segmentation. The location-specific segmentation tool use metadata is the segmentation tool use metadata that is collected for a particular location or neighborhood within the medical image. This may take different sizes in different examples. In some examples this may be a distance of a few pixels or a few voxels. In other instances, the definition of how large the edit location is may be larger.

Execution of the machine-executable instructions further causes the computational system to repeatedly determine the anatomical location using the edit location. The anatomical location is a location within a standardized or anatomical atlas reference location. In this step there is a transition from a physician within a particular medical image to a referenced anatomical location. The anatomical location may take different forms in different examples. In some instances, it may indicate a standard distance from particular anatomical landmarks. In other examples, the anatomical location may be a general region or a region adjacent to or within an anatomical structure. For example, the anatomical location may be defined as a bounding box, which includes a particular organ or organs. In other examples, the anatomical location may be a large or major region of a subject, for example, the anatomical location could be as large as a region like the thorax.

Execution of the machine-executable instructions further causes the computational system to repeatedly retrieve the expected segmentation tool use metadata from the segmentation tool use database using the anatomical location. Execution of the machine-executable instructions further causes the computational system to repeatedly determine if anomalous segmentation edit data is present by comparing the location-specific segmentation tool use metadata to the expected segmentation tool use metadata. In these steps, the location-specific segmentation tool use metadata is compared to the expected segmentation tool use metadata. If they for example vary by more than a predetermined amount or if they are outside ranges that may be specified in the expected segmentation tool use metadata, then it may provide for the detection of anomalous segmentation edit data. For example, the user, when entering the segmentation, had used too large or too small of a zoom region and maybe had moved the segmentation edit tool too quickly or too fast in comparison to what is normally performed.

Execution of the machine-executable instructions further causes the computational system to repeatedly provide a signal if the anomalous segmentation edit data is determined. The signal may provide for different effects in different examples of what the signal is. For example, the signal may cause the behavior of the user interface, such as to force the user to go back and edit the segmentation in a particular region more. The signal may for example be a warning signal. In other examples the signal may provide detailed instructions for the operator of the medical system to follow. Execution of the machine-executable instructions further causes the computational system to repeatedly construct a segmentation of the medical image using the segmentation edit data. Examples may provide for a higher quality or a more uniform segmentation of the medical image than without the providing of the signal when anomalous segmentation edit data is determined.

In clinical practice, segmentation of medical images is performed regularly. Examples of segmentations may be used for treatment planning (e.g., tumor segmentation) and segmentations may provide hundreds to thousands of potential measurements that can provide insight on the patient's health. These segmentations are typically performed manually or semi-automatically.

While automation has been helpful in reducing the amount of time it takes to perform a segmentation, there are still major problems to solve: it takes a long time and extensive training to learn the segmentation process and interobserver variability is a major issue when clinicians have the option to perform or correct segmentations.

Examples may provide for a system that may run in the background while a user performs segmentations. The tool may track the user's behavior, e.g., mouse speed, annotation speed, location in the image, gaze, etc. In case the tool spots potential problems or errors, the user receives a warning signal, possibly with an explanation of what is wrong.

The accuracy of these segmentations is key as an incorrect segmentation can have fatal consequences. An incorrect segmentation of a tumor or organs at risk can lead to incorrect planning and damaging of healthy tissue in radiotherapy. Incorrect measurements derived from erroneous segmentations can lead to incorrect diagnosis. This is also critical for clinical studies, e.g., for multiple sclerosis (MS) the effectiveness of drugs is measured by lesion development over time. These small lesions require highly accurate segmentations. Examples may assist an operator in performing more accurate segmentation of a medical image.

In various examples the medical image could take different forms. For example, it may be a two-dimensional slice or image. In other examples the medical image may be a three-dimensional dataset. In another example, the medical image is a four-dimensional data set. This is a three-dimensional image that varies in time.

The segmentation may take different forms for different types of images. For example, if the medical image is merely a two-dimensional image then the segmentation could for example simply be a line which is drawn. In other examples, when it was two dimensions, the segmentation may be a spline or other type of shape which may be stretched and deformed. In further examples, when the medical image is a three-dimensional dataset, the segmentation may be a shape deformable model, for example a three-dimensional manifold which may be distorted or moved. The type of segmentation entry tool may also be dependent upon the exact type of model or type of segmentation. If the segmentation is simply a line, then the segmentation entry tool may be akin or similar to drawing tools used for drawing, erasing or manipulating lines. If there is a three-dimensional model, the segmentation entry tool may for example be a tool which is used to stretch or deform the three-dimensional manifold.

In some examples the edit location could be a small neighborhood around the segmentation entry tool. In other examples it could be a larger region encompassing all or a portion of a medical image.

In another example, the memory further stores an image classifier. The image classifier is configured to output the anatomical location in response to receiving the medical image of the subject and the edit location within the medical image as input. Execution of the machine-executable instructions causes the computational system to receive the anatomical location in response to inputting the medical image and the edit location into the image classifier. This example may be beneficial because it may provide for an accurate and automatic means of determining the anatomical location using the edit location.

The image classifier may be implemented in different ways (e.g., a deep learning-based or model-based segmentation or object detection model) that detects anatomical regions in the image. E.g., in case of left ventricle segmentation, this could be the region of the mitral valve, the myocardium, the endocardial border, the segmentation of basal, mid, and apex region of anterior, inferior, antero-lateral, infero-lateral, antero-septal, or infero-septal wall. Another example is MS and brain lesions, where the anatomy detector detects the rough location of MS lesions. The anatomy detector does not have to be very accurate, i.e., does not generate a precise segmentation of the object; a rough anatomical region indicator is sufficient.

In one example the image classifier is an image classifier neural network. The medical image and the edit location may be entered into the image classifier neural network in different ways. In one example, the medical image is input as the full medical image and the edit location are coordinates within the medical image. In another example, the medical image and the edit location are input into the image classifier neural network by cropping or reducing the medical image to just the portion which is represented by the edit location.

The image classifier neural network may be implemented in different ways. It may for example be implemented as a convolutional neural network of the type which is typically used to classify images. For example, the EfficientNet, Vision Transformer (ViT), ConvNext, DenseNet, Inception, ResNet, ResNeXt, LeNet-5, AlexNet, and VGG 16 convolutional neural network architecture could be used. The image classifier neural network may be trained by creating training data. For example, medical images with the edit location, either as coordinates or by cropping the image, may be prepared and then labeled using the anatomical location. This may for example then be used to train the image classifier neural network using deep learning. If the edit location is provided as a coordinate within the medical image, then several additional inputs can be added to the input layer of the neural network. These additional inputs of the input layer may be used to encode the coordinates of the edit location instead of entering image data. This could be accomplished by modifying the input layer. One may add an additional vector-sized input to the network.

Cropping the medical image to an area representing the edit location enables the image classifier neural networks to assign a classification to the region represented by the cropped image.

There are additional options for detecting/classifying the anatomy. Firstly, using an object detection network such as Yolo (YoloV5- YoloV8 - many versions exist), R-CNN, or RetinaNet. These networks directly predict bounding boxes plus the class of the bounding box. The class of the box could be the anatomical region. This network can be trained with paris of images and manually annotated bounding boxes (the boxes can also be derived, e.g., from coordinates/landmarks or segmentation masks that were manually annotated).

Yet another approach is direct segmentation of the anatomy using a network such as U-Net, nnUnet, TransUnet, or DeepLabV3. This network does not need to be too accurate as one is just interested in a rough region, not exact boundaries. This network is trained with pairs of images and segmentation masks from manual annotations.

In some examples, the image classifier neural network, which may be a deep learning based anatomy detector and / or the algorithm used to generate an initial segmentation in the semiautomatic case outputs an uncertainty measure, e.g., based on softmax probabilities, Monte-Carlo dropout, or other uncertainty techniques.

In another example, the anatomical location is determined using the edit location in a different manner. For example, the data may be received manually from the user interface. In another example, the anatomical location may be determined by reading metadata from the medical image, for example there may be data in the DICOM file which indicates the anatomical location or there may be information or an initial segmentation of the medical image which may provide the anatomical location as a function of position within the medical image.

In another example, execution of the machine-executable instructions further causes the computational system to calculate one or more statistical measure from the location-specific segmentation tool use metadata. Execution of the machine-executable instructions further causes the computational system to detect the anomalous segmentation edit data by comparing the one or more statistical measures of the location-specific segmentation tool use metadata to the expected segmentation tool use metadata. This may be an effective means of automatically detecting the anomalous segmentation edit data.

The segmentation may be one or more statistical measure that can or may be likely specific to a particular edit location. For example, the statistical measure may be a mean, average, maximum, or minimum value of various values within the segmentation tool use metadata. In another example, the memory further stores a segmentation module that is configured to output an initial segmentation in response to receiving the medical image as an input. The segmentation module may take different forms in different examples. There may for example be an algorithmic segmentation module that is able to perform the initial segmentation that uses a model fit to detected anatomical landmarks. In other examples, the segmentation module may for example be a neural network such as a U-net which has been trained to output the initial segmentation. The segmentation module may therefore be any of the various types of automated segmentation modules which are currently available.

Execution of the machine-executable instructions further causes the computational system to receive the initial segmentation in response to inputting the medical image into the segmentation module. The rendering of the medical image on user interface comprises displaying the initial segmentation on the user interface. Constructing the segmentation of the medical image using the segmentation edit data comprises editing the initial segmentation using the segmentation edit data. This example may be beneficial because it may provide a good starting point for the manual entry of the segmentation.

In another example, the signal comprises displaying a pointer located at the edit location pointed towards a closest original location of the initial segmentation. In this example, the pointer is an arrow that points from where the segmentation currently is to where it was initially. This may be useful in case the segmentation was improperly edited.

In another example, the segmentation module is configured to detect and segment anomalous anatomy. The anomalous anatomy may for example be tissue which is not normal anatomy such as scar tissue or tumor tissue. This example may be beneficial because it may provide a means of helping to automatically measure this anatomy such as tumor size.

In another example, the signal comprises displaying a predetermined warning message. This for example could be a standard warning indicating to the user to take more care or to redo portions of the segmentation.

In another example, the memory further stores a segmentation instruction database comprising segmentation instructions indexed by the anatomical location. Execution of the machine-executable instructions further causes the computational system to receive segmentation instructions in response to querying the segmentation instruction database with the anatomical location. Providing the signal comprises displaying the segmentation instructions on the user interface.

This example may be beneficial because there may be specific steps which an operator should take to segment a particular anatomical location correctly. The displaying of the segmentation instructions then may be used by the operator to properly segment the region for which the signal was provided. The operator may then properly re-segment the region responsible for providing the signal by simply following the instructions.

The signal comprises an overlay configured to modify a rendering of the segmentation at the edit location. For example, if it is detected that a certain portion of the segmentation triggers or provides a signal, then the parents of the segmentation at this location may be modified. For example, the thickness or the line type such as dashed or having hyphens in it may be modified. In other examples the color of the segmentation at the edit location may be modified to emphasize to the operator that more care or a redo of the segmentation should be performed.

In another example, the memory further stores an edge detection algorithm configured for outputting a detected edge in response to receiving the medical image as input. The edge detection algorithm may for example be an algorithmic edge detection algorithm which is above to detect edges in images. There exists a variety of existing algorithms which may be used for performing this. Execution of the machine-executable instructions further causes the computational system to receive the detected edge in response to receiving the medical image as input. Execution of the machine-executable instructions further causes the computational system to calculate a detected smoothness of the detected edge with the predetermined distance from the edit location. Edges can, for example, be detected by a standard edge detection filter such as Laplace or Canny.

Execution of the machine-executable instructions further causes the computational system to calculate a segmentation smoothness of the segmentation of the medical image within the predetermined distance of the edit location. Execution of the machine-executable instructions further causes the computational system to trigger providing the signal if the segmentation smoothness is different from the detected smoothness by more than a predetermined threshold.

In this example, the smoothness of a detected edge in the medical image is compared to the smoothness of a segmentation. This may be a useful means of automatically detecting if the segmentation does not represent the actual segmentation of the medical image.

In another example the segmentation tool use metadata comprises any one of the following: a maximum segmentation entry tool velocity, a minimum segmentation entry tool velocity, an average segmentation entry tool velocity, a segmentation entry tool location, a segmentation entry tool dwell time in the edit location, overall annotation speed, mouse speed, visual gaze tracking, visual gaze tracking speed, visual gaze speed, pause duration of use of the segmentation entry tool, number of pauses in use of the segmentation entry tool likely within the edit location, changes in segmentation entry tool speed, segmentation entry tool size, use of eraser functionality of the segmentation entry tool, and combinations thereof.

The various things such as visual gaze tracking, visual gaze tracking speed, visual gaze tracking speed pause during the duration of the entry tool may of course be implemented by implementing or including a system for tracking the eye position of the operator of the medical system.

In another example the medical image is any one of the following: an x-ray, an ultrasound image, a fluoroscope image, a magnetic resonance image, a tomographic medical image, a computed tomography image, a single photon emission tomography image, or a positron emission tomography image.

In another example the medical system further comprises a medical imaging system configured for acquiring the medical image. Execution of the machine executable instructions further cause the medical imaging system to acquire the medical image.

In another example, the medical imaging system is any one of the following: a computed tomography system, a diagnostic ultrasound system, a digital fluoroscope system, an x-ray system, a single photon emission tomography system, and a positron emission tomography system.

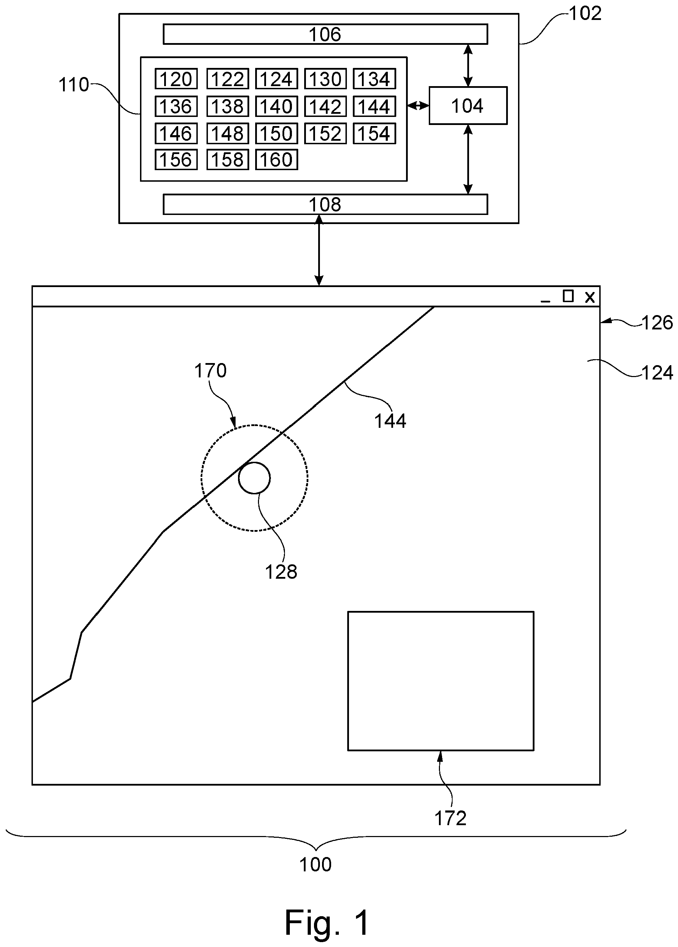

Fig. 1 illustrates an example of a medical system 100 according to an example. The medical system 100 is shown as comprising a computer 102. The computer 102 comprises a computational system 104. There is an optional hardware interface 106 which may be used to incorporate additional components into the medical system 100. The hardware interface 106 is shown as being in communication with the computational system 104. There is also a user interface 108 and memory 110 that are in communication with the computational system 104 also. The memory 110 is intended to represent various types of memory which the computational system 104 may have access to.

The memory 110 is shown as containing machine-executable instructions 120. The machine-executable instructions 120 may enable the computational system 104 to perform various numerical, computational and other tasks such as controlling other components of the medical system 100 if they are present. The memory 110 is further shown as containing a segmentation tool use database 122. The segmentation tool use database 122 stores expected segmentation tool use metadata 138 as a function of the edit location 170. This may for example be implemented as a table, a file, or a relational database in different examples.

The memory 110 is further shown as containing a medical image 124. The memory 110 is further shown as containing segmentation edit data 130. The interface 108 is shown as implementing a graphical user interface 126. The graphical user interface 126 shows a rendering of the medical image 124 as well as a segmentation 144 that has been edited. There is a segmentation entry tool 128. There is a neighborhood surrounding the segmentation entry tool 128 that is the edit location 170. The segmentation entry tool 128 is controlled and the segmentation edit data 130, either to input or modify the segmentation 144, is performed. Within the edit location 170 location-specific segmentation tool use metadata 134 is recorded in the memory 110. This is metadata about the use of the segmentation entry tool 128 as a function of the edit location 170. The edit location 170 may be a small area, as is indicated in the present image, or it may be the entire image or different regions or anatomical regions within the medical image 124.

The location-specific segmentation tool use metadata 134 is shown as being stored in the memory 110. The edit location 170 is then referenced as an anatomical location 136. The anatomical location 136 is also shown as being stored in the memory 110. Using the anatomical location 136 the segmentation tool use database 122 is queried and the expected segmentation tool use metadata 138 is returned. The memory 110 is further shown as storing a comparison between the location-specific segmentation tool use metadata 134 and the expected segmentation tool use metadata 138. If this comparison indicates that there is an anomaly or it is outside a predetermined range, then a signal 142 is produced. The signal 142 may trigger various actions of the medical system 100 in different cases.

The memory 110 is shown as storing the segmentation as well as rendering it on the graphical user interface 124. The memory 110 is shown as containing an optional image classifier 146 that is able to receive the medical image 124 and the edit location 170 as input and in response to output the anatomical location 136. The memory 110 is further shown as containing optional edge detection algorithm 148 that is able to output an optional detected edge 150. The image classifier may be an image classifier neural network.

The optional detected edge 150 is shown as being stored in the memory. The memory is further shown as storing optional detected edge smoothness 152 calculated from the detected edge 150. The memory 110 is further shown as containing an optional segmentation smoothness 154 calculated for the segmentation 144 within the edit location 170. A comparison between the detected edge smoothness 152 and the segmentation smoothness 154 can also be used to trigger the signal 142.

The memory 110 is further shown as containing an optional segmentation module 156. The optional segmentation module 156 may be used to provide an initial segmentation of the medical image 124. The memory 110 is further shown as containing an optional segmentation instruction database 158. This may be used to provide optional segmentation instructions 160 that may for example be provided in response to the signal 142 being produced. For example, the segmentation instruction database 158 could provide location-specific segmentation instructions 160. The graphical user interface 124 may contain an instruction box which may be used to display the segmentation instructions 160.

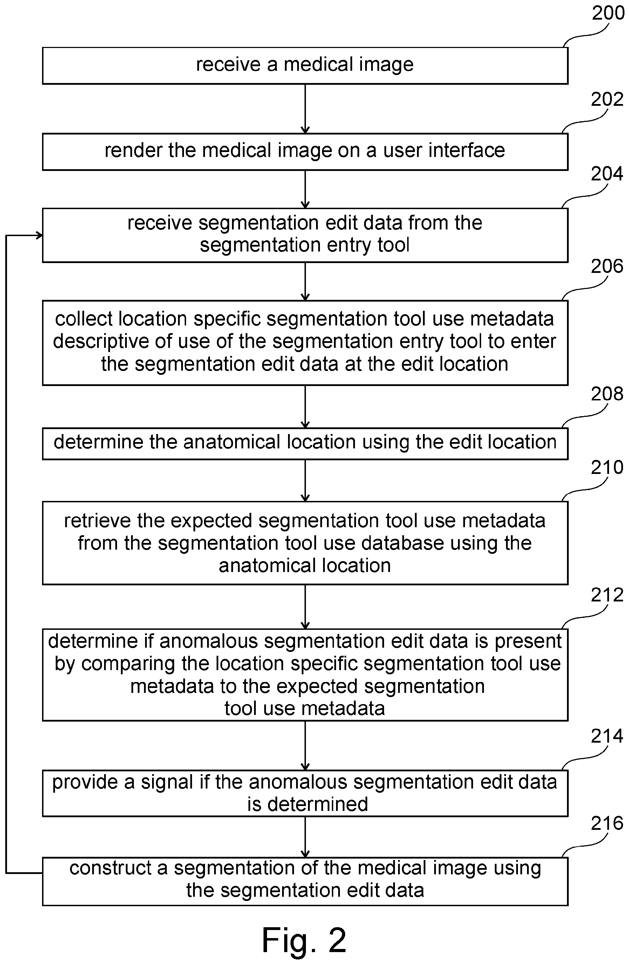

Fig. 2 shows a flowchart which illustrates a method of operating the medical system 100 of Fig. 1. In step 200 the medical image 124 is received. Next, in step 202, the medical image 124 is rendered on the user interface 126. The user interface 126 comprises a segmentation entry tool 128. In step 204, the segmentation edit data 130 is received from the segmentation entry tool 128. The segmentation edit data 130 comprises an edit location 170 within the medical image 124. In step 206, the location-specific segmentation tool use metadata 134 is collected for the edit location 170. In step 208, the anatomical location 136 is determined from the edit location 170. In step 210, the expected segmentation tool use metadata 138 is retrieved from the segmentation tool use database 122 using the anatomical location 136. In step 212, it is determined if the anomalous segmentation edit data is present by comparing the location-specific segmentation tool use metadata 134 to the expected segmentation tool use metadata 138. In step 214, the signal 142 is provided if the anomalous segmentation edit data is determined or detected. In step 216, the segmentation 144 is constructed or edited using the segmentation edit data 130.

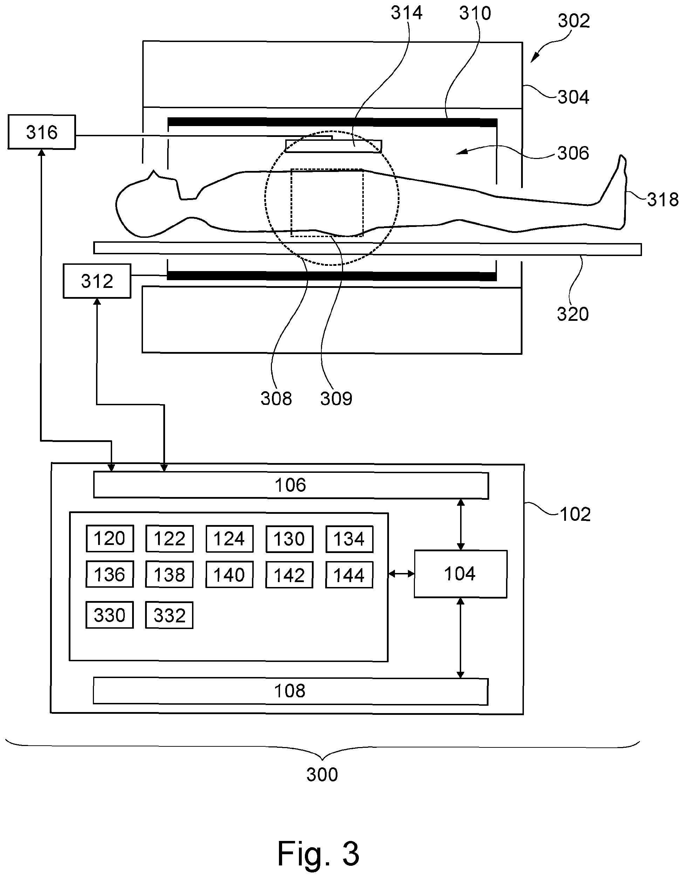

Fig. 3 illustrates a further example of the medical system 300. The medical system 300 illustrated in Fig. 3 is similar to the medical system 100 of Fig. 1 but it is shown as additionally comprising a magnetic resonance imaging system 302. A magnetic resonance imaging system 302 is used as an example. The magnetic resonance imaging system is an example of a medical imaging system that is used to acquire the medical image 124. The magnetic resonance imaging system could, for example be replaced with a computed tomography system, a diagnostic ultrasound system, a digital fluoroscope system, an x-ray system, a single photon emission tomography system, or a positron emission tomography system.

The magnetic resonance imaging system 302 comprises a magnet 304. The magnet 304 is a superconducting cylindrical type magnet with a bore 306 through it. The use of different types of magnets is also possible; for instance it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils.

Within the bore 306 of the cylindrical magnet 304 there is an imaging zone 308 where the magnetic field is strong and uniform enough to perform magnetic resonance imaging. A field of view 309 is shown within the imaging zone 308. The k-space data that is acquired typically acquried for the field of view 309. The region of interest could be identical with the field of view 309 or it could be a sub volume of the field of view 309. A subject 318 is shown as being supported by a subject support 320 such that at least a portion of the subject 318 is within the imaging zone 308 and the field of view 309.

Within the bore 306 of the magnet there is also a set of magnetic field gradient coils 310 which is used for acquisition of preliminary k-space data to spatially encode magnetic spins within the imaging zone 308 of the magnet 304. The magnetic field gradient coils 310 connected to a magnetic field gradient coil power supply 312. The magnetic field gradient coils 310 are intended to be representative. Typically magnetic field gradient coils 310 contain three separate sets of coils for spatially encoding in three orthogonal spatial directions. A magnetic field gradient power supply supplies current to the magnetic field gradient coils. The current supplied to the magnetic field gradient coils 310 is controlled as a function of time and may be ramped or pulsed.

Adjacent to the imaging zone 308 is a radio-frequency coil 314 for manipulating the orientations of magnetic spins within the imaging zone 308 and for receiving radio transmissions from spins also within the imaging zone 308. The radio frequency antenna may contain multiple coil elements. The radio frequency antenna may also be referred to as a channel or antenna. The radio-frequency coil 314 is connected to a radio frequency transceiver 316. The radio-frequency coil 314 and radio frequency transceiver 316 may be replaced by separate transmit and receive coils and a separate transmitter and receiver. It is understood that the radio-frequency coil 314 and the radio frequency transceiver 316 are representative. The radio-frequency coil 314 is intended to also represent a dedicated transmit antenna and a dedicated receive antenna. Likewise the transceiver 316 may also represent a separate transmitter and receivers. The radio-frequency coil 314 may also have multiple receive/transmit elements and the radio frequency transceiver 316 may have multiple receive/transmit channels.

The transceiver 316 and the gradient controller 312 are shown as being connected to the hardware interface 106 of the computer system 102.

The memory 110 is shown as additionally containing the pulse sequence commands 330. The pulse sequence command 330 are commands or data which may be converted into commands to control the magnetic resonance imaging system 302 to acquire k-space data 332 according to a three-dimensional medical magnetic resonance imaging protocol. The memory 110 is shown as containing k-space data 332 that has been acquired by controlling the magnetic resonance imaging system 302 with the pulse sequence commands 330. The memory 110 is further shown as containing a magnetic resonance image 334, which is an example of a medical image 124. Depending upon the magnetic resonance imaging protocol, the magnetic resonance image may be a single two-dimensional image, a stack of two dimensional images forming a three dimensional data set, or a three dimensional data set.

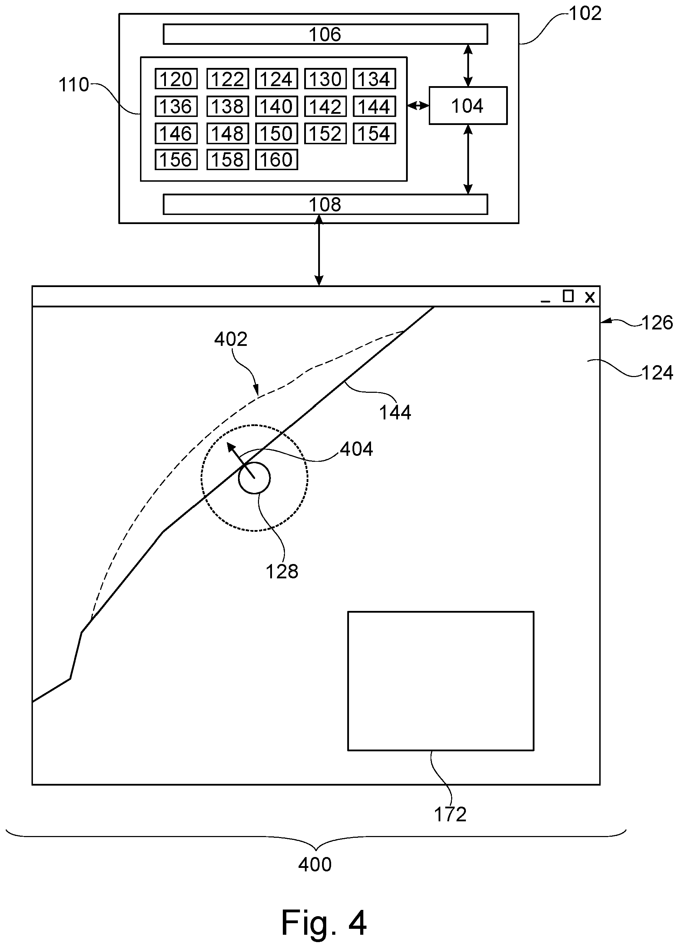

Fig. 4 illustrates a further example of a medical system 400 that is similar to the medical system 100 pictured in Fig. 1. In this case the segmentation module 156 was used to construct an initial segmentation 402. This is represented by a dashed line on the user interface 124. When the signal is produced it results in a pointer 404, which points from the segmentation entry tool 128 to the closest location of the initial segmentation 402. This for example may be a useful guide if the segmentation 144 has been edited too much or is currently incorrect. This may be useful in helping the user or suggesting which direction to modify the segmentation 144.

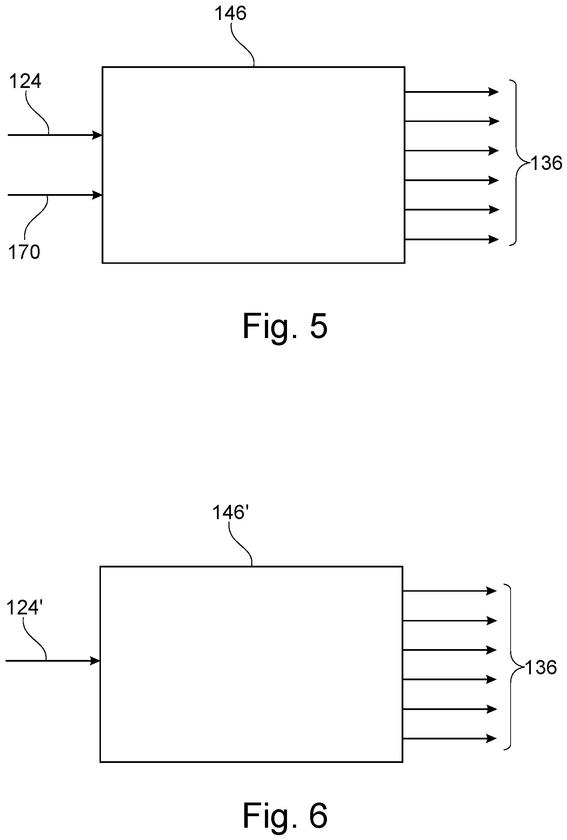

Fig. 5 illustrates an example of an image classifier neural network 146. It receives as input a medical image 124 and the edit location 170. The edit location 170 could for example be values which are used to code the location of the segmentation entry tool 128 within the medical image 124. The output is the anatomical location 136. In this case, the output of the image classifier neural network 146 is multiple outputs for different predetermined anatomical locations 136. The output at each of these points indicates the probability that the edit location 170 is at a particular anatomical location 136. This is typical for convolutional neural networks which are used for providing image classification.

Fig. 6 illustrates an alternative implementation of the image classifier neural network 146. In this example, there is a single input which is a cropped version of the medical image 124'. The cropped version 124' represents the portion of the medical image 124 which is currently considered to be the edit location 170. The output of the neural network 146' is again multiple anatomical locations 136. The output at each of these locations represents a probability that the edit location 170 is a particular anatomical location 136. This structure is also typical for convolutional neural networks used for image classifiers.

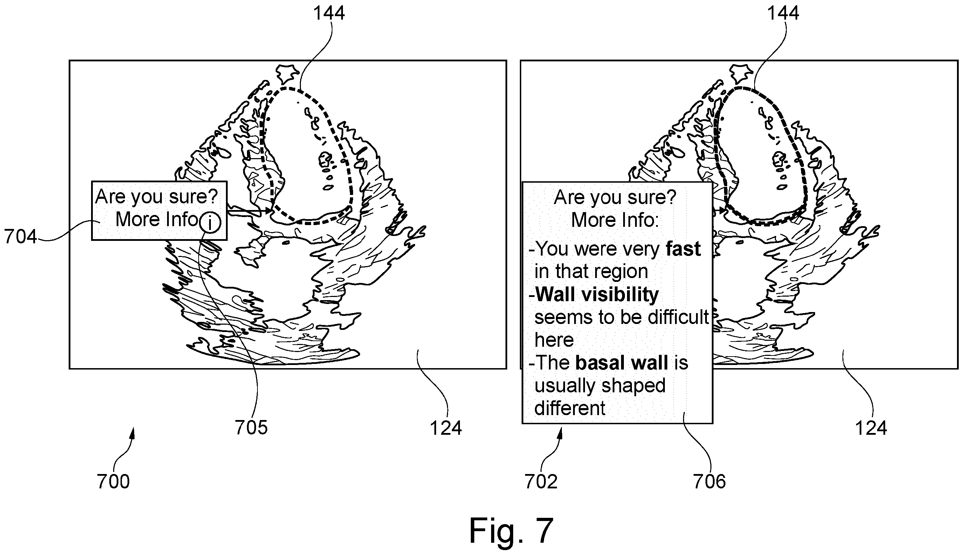

As described above, examples may comprise different elements. On element is the user interface 108 or Graphical User Interface (GUI) where a user performs segmentations or manually modifies manually entered or automated segmentations. In the background, the computational system tracks the user behavior using the location specific segmentation tool use metadata 134, detects problematic behavior, correlates it with anatomical regions via the location specific segmentation tool use metadata 134 and prior knowledge about these regions via the expected segmentation tool use metadata 138, and outputs a warning (a signal 142), possibly with additional information for the user. An example instance of the user interface 108 GUI is shown below in Fig. 7.

Fig. 7 shows two views, 700, 702, of the user interface 124. A completed segmentation 144 is shown in both views. In image 700 there is a first message box 704, which indicates a region of the segmentation 144, which may contain an error as detected by the medical system 100. If the operator of the medical system would like more information they can click on the info indicator 705 and the first message box 704 transforms into the second message box 706 as is illustrated in image 702. The second message box 706 provides more detailed information to the operator. The message box 706 is a pop-up is shown to the user, due to a problem that was detected and is an example of a signal 142. By clicking on the info indicator 705, the user receives more information: 1) the user was very fast in that region which the system detected by mouse speed 2) wall visibility seems to be difficult which the system derived from the DL-based anatomy detector's uncertainty 3) there is additional prior information pulled-in from a database.

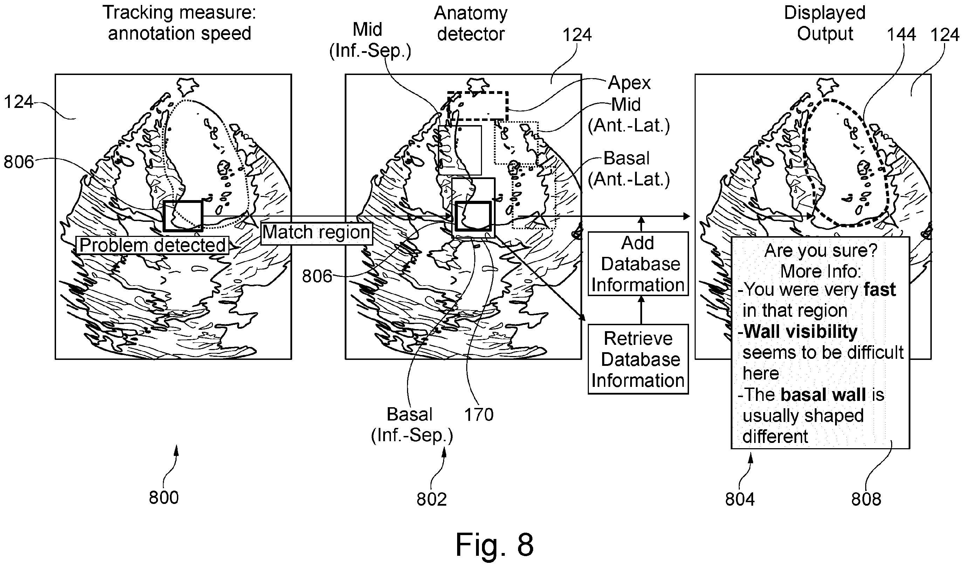

Fig. 8 illustrates the detection of anomalous segmentation edit data. Image 800 shows the segmentation 144 and the tracking measure or the annotation speed is recorded. In region 806, shown in image 800, it has been detected that the tracking speed is too fast. Image 802 indicates how the edit locations 170 are determined for the segmentation 144. The block labeled 170 is the edit location 170 for the problem region 806, which is marked in image 800. Using this edit location the region with the problem 806 is matched to an anatomical location 136 using a neural network. This then causes the segmentation tool use database 122 to be queried and a message 808 is provided. This provides instructions on how the segmentation in the region 806 may be improved.

In greater detail, the steps illustrated in Fig. 8 include:
1. When opening an image to segment, the anatomy detector (image classifier 146) may be triggered in the background. The user can proceed with segmentations/corrections while it is running.
2. While segmenting/correcting, the user behavior is tracked by recording the location specific segmentation tool use data 134 and analyzed in the background by comparing the location specific segmentation tool use metadata 134 to the expected segmentation tool use metadata 138.
3. If an outlier/problem 806 is detected, the pixel location of where this problem is may be correlated with the anatomical information. A message 808 to the user is prepared based on the anatomical information.
4. The pop-up message 808 is displayed in the user GUI with a button to view the full information on the issue as shown in image 804. The user may, for example, be provided with information on what is wrong and potential help. The message to the user may be built by predefined text blocks or the message may be generated by a language model that receives information pieces as tokens and outputs a full text.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A `computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

`Computer memory' or 'memory' is an example of a computer-readable storage medium. Computer memory is any memory which is directly accessible to a computational system. `Computer storage' or 'storage' is a further example of a computer-readable storage medium. Computer storage is any non-volatile computer-readable storage medium. In some embodiments computer storage may also be computer memory or vice versa.

A `computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.
A `user interface' as used herein is an interface which allows a user or operator to interact with a computer or computer system. A `user interface' may also be referred to as a `human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A `hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or `display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: hardware interface
- 108: user interface
- 110: memory
- 120: machine executable instructions
- 122: segmentation tool use database
- 124: medical image
- 124': cropped medical image
- 126: user interface
- 128: segmentation entry tool
- 130: segmentation edit data
- 134: location specific segmentation tool use metadata
- 136: anatomical location
- 138: expected segmentation tool use metadata
- 140: comparison between location specific segmentation tool use metadata and expected segmentation tool use metadata
- 142: signal
- 144: segmentation
- 146: image classifier or image classifier neural network
- 146': image classifier neural network
- 148: edge detection algorithm
- 150: detected edge
- 152: detected edge smoothness
- 154: segmentation smoothness
- 156: segmentation module
- 158: segmentation instruction database
- 160: segmentation instructions
- 170: edit location
- 172: instruction box
- 200: receive a medical image
- 202: render the medical image on a user interface
- 204: receive segmentation edit data from the segmentation entry tool
- 206: collect location specific segmentation tool use metadata descriptive of use of the segmentation entry tool to enter the segmentation edit data at the edit location
- 208: determine the anatomical location using the edit location
- 210: retrieve the expected segmentation tool use metadata from the segmentation tool use database using the anatomical location
- 212: determine if anomalous segmentation edit data is present by comparing the location specific segmentation tool use metadata to the expected segmentation tool use metadata
- 214: provide a signal if the anomalous segmentation edit data is determined
- 216: construct a segmentation of the medical image using the segmentation edit data
- 300: medical system
- 302: magnetic resonance imaging system
- 304: magnet
- 306: bore of magnet
- 308: imaging zone
- 309: field of view
- 310: magnetic field gradient coils
- 312: magnetic field gradient coil power supply
- 314: radio-frequency coil
- 316: transceiver
- 318: subject
- 320: subject support
- 330: pulse sequence commands
- 332: k-space data
- 334: magnetic resonance image
- 400: medical system
- 402: initial segmentation
- 404: pointer
- 700: view of user interface
- 702: view of user interface
- 705: info indicator
- 704: first message box
- 706: second message box
- 800: image
- 802: image
- 804: image
- 806: problem region
- 808: message (signal)

## Claims

1. A medical system (100, 300, 400) comprising:
- a memory (110) storing machine executable instructions (120) and a segmentation tool use database (122), wherein the segmentation tool use database comprises expected segmentation tool use metadata (138) indexed as a function of an anatomical location (136);
- a computational system, wherein execution of the machine executable instructions causes the computational system to:
- receive (200) a medical image (124);
- render (202) the medical image on a user interface (126), wherein the user interface comprises a segmentation entry tool;
wherein execution of the machine executable instructions further causes the computational system to repeatedly:
- receive (204) segmentation edit data (130) from the segmentation entry tool, wherein the segmentation edit data comprises an edit location (170) within the medical image;
- collect (206) location specific segmentation tool use metadata (134) descriptive of use of the segmentation entry tool to enter the segmentation edit data at the edit location;
- determine (208) the anatomical location using the edit location;
- retrieve (210) the expected segmentation tool use metadata from the segmentation tool use database using the anatomical location;
- determine (212) if anomalous segmentation edit data (806) is present by comparing the location specific segmentation tool use metadata to the expected segmentation tool use metadata;
- provide (214) a signal (142, 404, 808) if the anomalous segmentation edit data is determined; and
- construct (216) a segmentation (144) of the medical image using the segmentation edit data.

2. The medical system of claim 1, wherein the memory further stores an image classifier (146,146'), wherein the image classifier is configured to output the anatomical location in response to receiving the medical image of the subject and the edit location within the medical image as input, wherein execution of the machine executable instructions causes the computational system to receive the anatomical location in response to inputting the medical image and the edit location into image classifier.

3. The medical system of claim 1 or 2, wherein execution of the machine executable instructions further causes the computational system to:
- calculate one or more statistical measure from the location specific segmentation tool use metadata; and
- detect the anomalous segmentation edit data by comparing the one or more statistical measure of the location specific segmentation tool use metadata to the expected segmentation tool use metadata.

4. The medical system of any one of the preceding claims, wherein the memory further stores a segmentation module (156) configured to output an initial segmentation in response to receiving the medical image as input, wherein execution of the machine executable instructions further causes the computational system to receive the initial segmentation in response to inputting the medical image into to the segmentation module, wherein rendering the medical image on the user interface comprises displaying the initial segmentation on the user interface, wherein constructing the segmentation of the medical image using the segmentation edit data comprises editing the initial segmentation using the segmentation edit data.

5. The medical system of claim 4, wherein the signal comprises displaying a pointer (404) located at the edit location pointed towards a closest original location of the initial segmentation.

6. The medical system of claim 4 or 5, wherein the segmentation module is configured to detect and segment anomalous anatomy.

7. The medical system of any one of the preceding claims, wherein the signal comprises displaying a predetermined warning message (172, 706).

8. The medical system of any one of the preceding claims, wherein the memory further stores a segmentation instruction database (158) comprising segmentation instructions indexed by the anatomical location, wherein execution of the machine executable instructions further causes the computational system to receive segmentation instructions in response to querying the segmentation instruction database with the anatomical location; and wherein providing the signal comprises displaying the segmentation instructions on the user interface.

9. The medical system of any one of the preceding claims, wherein the signal comprises an overlay configured to modify a rendering of the segmentation at the edit location.

10. The medical system of any one of the preceding claims, wherein the memory further stores an edge detection algorithm (148) configured for outputting a detected edge in response to receiving the medical image as input, wherein execution of the machine executable instructions further causes the computational system to:
- receive the detected edge in response to receiving the medical image as input;
- calculate a detected smoothness of the detected edge within a predetermined distance from the edit location;
- calculate a segmentation smoothness of the segmentation of the medical image within the predetermined distance from the edit location;
- trigger providing the signal if the segmentation smoothness is different from the detected smoothness by more than a predetermined threshold.

11. The medical system of any one of the preceding claims, wherein the segmentation tool use metadata comprises any one of the following: a maximum segmentation entry tool velocity, a minimum segmentation entry tool velocity, an average segmentation entry tool velocity, a segmentation entry tool location, segmentation entry tool dwell time in the edit location, overall annotation speed, mouse speed, visual gaze tracking, visual gaze tracking speed, visual gaze speed, pause duration of use of the segmentation entry tool, number of pauses in use of the segmentation entry tool, changes in segmentation entry tool speed, segmentation entry tool size, use of eraser functionality of the segmentation entry tool, and combinations thereof.

12. A method of medical imaging,
wherein the method comprises:
- receiving (200) a medical image (124);
- rendering (202) the medical image on a user interface (126), wherein the user interface comprises a segmentation entry tool;
wherein the method further comprises repeatedly:
- receiving (204) segmentation edit data (130) from the segmentation entry tool,
wherein the segmentation edit data comprises an edit location (170) within the medical image;
- collecting (206) location specific segmentation tool use metadata (134) descriptive of use of the segmentation entry tool to enter the segmentation edit data at the edit location;
- determining (208) an anatomical location (136) using the edit location;
- retrieving (210) the expected segmentation tool use metadata from a segmentation tool use database (122) using the anatomical location, wherein the segmentation tool use database comprises expected segmentation tool use metadata indexed as a function of the anatomical location;
- determining (212) if anomalous segmentation edit data (806) is present by comparing the location specific segmentation tool use metadata to the expected segmentation tool use metadata;
- providing (214) a signal (142, 404, 808) if the anomalous segmentation edit data is determined; and
- constructing (216) a segmentation (144) of the medical image using the segmentation edit data.

13. A computer program comprising machine executable instructions (120) and a segmentation tool use database (122), wherein the segmentation tool use database comprises expected segmentation tool use metadata (138) indexed as a function of an anatomical location (136), wherein execution of the machine executable instructions causes a computational system (104) to:
- receive (200) a medical image (124);
- render (202) the medical image on a user interface (126), wherein the user interface comprises a segmentation entry tool (128);
wherein execution of the machine executable instructions further causes the computational system to repeatedly:
- receive (204) segmentation edit data (130) from the segmentation entry tool, wherein the segmentation edit data comprises an edit location (170) within the medical image;
- collect (206) location specific segmentation tool use metadata descriptive of use of the segmentation entry tool to enter the segmentation edit data at the edit location;
- determine (208) the anatomical location using the edit location;
- retrieve (210) the expected segmentation tool use metadata from the segmentation tool use database using the anatomical location;
- determine (212) if anomalous segmentation edit data (806) is present by comparing the location specific segmentation tool use metadata to the expected segmentation tool use metadata;
- provide (214) a signal (142, 404, 808) if the anomalous segmentation edit data is determined; and
- construct (216) a segmentation (144) of the medical image using the segmentation edit data.

14. The computer program of claim 13, wherein the computer program further comprises an image classifier (146, 146'), wherein the image classifier is configured to output the anatomical location in response to receiving the medical image of the subject and the edit location within the medical image as input, wherein execution of the machine executable instructions causes the computational system to receive the anatomical location in response to inputting the medical image and the edit location into image classifier.

15. The computer program of claim 13 or 14, wherein execution of the machine executable instructions further causes the computational system to:
- calculate one or more statistical measure from the location specific segmentation tool use metadata; and
- detect the anomalous segmentation edit data by comparing the one or more statistical measure of the location specific segmentation tool use metadata to the expected segmentation tool use metadata.
